# EUROPEAN PATENT SPECIFICATION

(11) **EP 1 945 958 B1**
(45) Date of publication and mention of the grant of the patent: **20.02.2013**
(21) Application number: 06801648.4
(22) Date of filing: 16.08.2006
(51) Int. Cl.: F16B 23/00, B25B 15/00

(54) **FASTENERS WITH MULTI-TIERED RECESSES AND DRIVERS WITH MULTI-TIERED DRIVING TIPS**
BEFESTIGUNGSELEMENTE MIT MEHRSCHICHTIGEN AUSSPARUNGEN UND TREIBER MIT MEHRSCHICHTIGEN TREIBSPITZEN
ÉLÉMENTS DE FIXATION AVEC EMPREINTES À PLUSIEURS ÉTAGES ET VIS AVEC POINTES DE VIS À PLUSIEURS ÉTAGES

(30) Priority: 17.08.2005 US 709134 P
(43) Date of publication of application: 23.07.2008
(60) Divisional application: 10185940.3
(73) Proprietor: Uni-Screw Worldwide, Inc., Knoxville, TN 37919 (US)
(72) Inventor: GEMES, Gary, A., Mineral Springs, NC 28108 (US); HART, Renee, Johnson, Indian Trail, North Carolina 28079 (US); HENLY, John W., Lawrenceville Georgia 30043 (US)
(74) Representative: Harrison Goddard Foote
(86) International application number: PCT/US2006/032021
(87) International publication number: WO 2007/022293

(56) References cited:
- EP-A2- 0 172 130
- US-A- 4 380 942
- US-B2- 6 792 838

## Description

### BACKGROUND

The present application relates to fasteners having multi-tiered recesses for mating with a corresponding multi-tiered driver. Such fasteners are known, for example, from US 2005/0086791 A1; US 6,755,748 B2; US 6,792,838 B2 and US 6,988,432 B2. There is always a desire for fasteners and drivers that provide a new balance of properties. In some situations, an important property relates to the interference fit between the multi-tiered recesses of a fastener and the multi-tiered tip of the corresponding driver. Achieving a good interference fit in a cost-effective manner can be advantageous.

### BRIEF SUMMARY OF SOME ASPECTS OF THE INVENTION

US 6,792,838 B2 discloses fasteners in a range of different sizes wherein each fastener includes a threaded shank connected to a head, the shank including an elongate axis that extends in an axial direction, the head including an end that is distant from the shank, and the head defining a driving recess that is open at the end of the head; wherein
a) at least some smaller fasteners of the range have a driving recess that is a single, first recess that has a first length that extends in the axial direction between the opposite ends of said first recess;
b) at least some medium-sized fasteners of the range have a driving recess that is a composite recess that includes at least a first recess and a second recess that are superimposed with respect to one another; wherein the first recess has a length that extends in the axial direction between opposite ends of the first recess, and the second recess is between said open end and said first recess and has a length that extends in the axial direction between opposite ends of the second recess; and
c) at least some larger-sized fasteners of the range have a driving recess that is a composite recess that includes at least a first recess, a second recess and a third recess that are superimposed with respect to one another; wherein the first recess has a length that extends in the axial direction between opposite ends of the first recess, the second recess has a length that extends in the axial direction between opposite ends of the second recess, and the third recess is between said open end and said second recess and has a length that extends in the axial direction between opposite ends of the third recess and the lengths of the first and second recesses are the same as the lengths of said first and second recesses of the medium sized fasteners; and
   wherein a driving tip of a driving tool adapted to fit and drive all of the first, second and third recesses of the composite recess of the larger-sized fasteners also fits and drives all the recesses of the smaller and medium-sized fasteners.

In accordance with one aspect of the present invention such fasteners are characterised in that, in the medium-sized fasteners, the length of the second recess is greater than the length of the first recess and the length of the first recess is the same as the length of said first recess of said smaller-sized fasteners, and in the larger-sized fasteners, the length of the third recess is less than the length of the second recess.

In accordance with another aspect of the present invention, a fastener system comprises a driver and a range of fasteners as defined above, wherein: the driver includes a tip for being received in the driving recess of any of the smaller-, medium- or larger-sized fasteners in a predetermined manner; the tip of the driver includes a first tier, a second tier and a third tier that are superimposed with respect to one another; the first tier and the first recess are cooperatively adapted so that the first tier drivingly engages within the first recess while the tip is within the driving recess of smaller-, medium- and larger-sized fasteners in the predetermined manner; the second tier and the second recess are cooperatively adapted so that the second tier drivingly engages within the second recess and along at least substantially the entire length of the second recess while the tip is within the driving recess (30,40) of medium- and larger-sized fasteners in the predetermined manner; and the third tier (40) and the third recess are cooperatively adapted so that the third tier drivingly engages within the third recess while the tip is within the driving recess of larger-sized fasteners in the predetermined manner.

Advantageous optional features of the fasteners are defined in claims 2 to 6.

In accordance with one example and advantageously, the length difference(s) between tiers can be a cost-effective means for helping to achieve a good interference between the composite recess of the fastener and the tip of the a driver.

In accordance with one aspect of the present invention, each of the first, second and third recesses, as well as each of the first, second and third tiers, is polygonal, or more specifically hexagonal, although other shapes are also within the scope of the present invention.

In accordance with one aspect of the present invention, the tip of the driver is twisted while the tip is in the composite recess, so that the tiers simultaneously respectively drive the recesses, and thereby the fastener is driven by the driver.

Other aspects and advantages of the present invention will become apparent from the following.

### BRIEF DESCRIPTION OF THE DRAWINGS

Reference is made in the following to the accompanying drawings, which illustrate an exemplary embodiment of the present invention and are not necessarily drawn to scale, and wherein:
Figure 1 is a cross-sectional view taken along the lengthwise centerline of a fastener (i.e., taken along line 1-1 of Figure 2), with a significant portion of the fastener's shank cut away;
Figure 2 is a top plan view of the fastener of Figure 1;
Figure 3 is a side elevation view of a driver that can be used to operate the fastener of Figure 1;
Figure 4 is a bottom plan view of the driver of Figure 3; and
Figures 5-18 are like Figure 1, except that they are for other fasteners.

### DETAILED DESCRIPTION OF EXEMPLARY EMBODIMENT

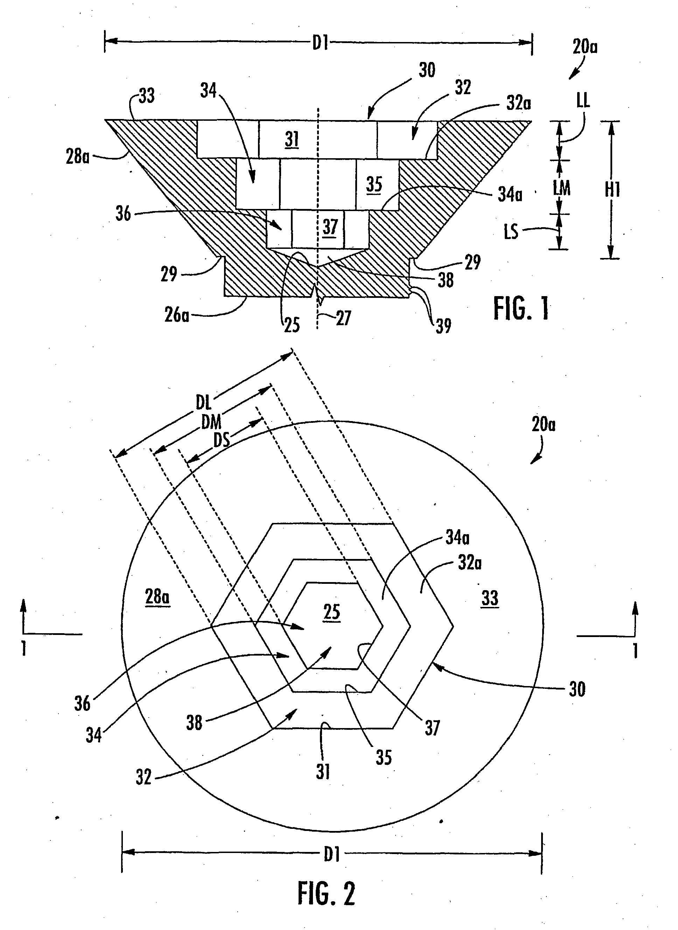

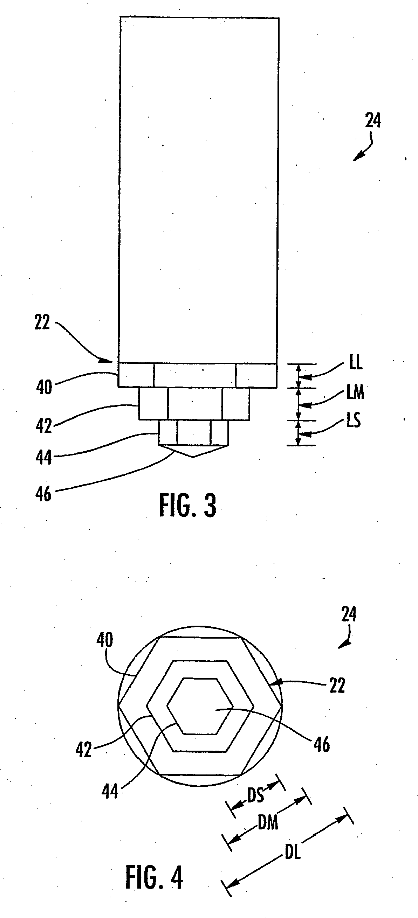

Referring now in greater detail to the drawings, which illustrate an exemplary embodiment of the present invention and in which like numerals refer to like parts throughout the several views, a variety of fasteners 20a-e, 120a-e, 220a-e are illustrated in Figures 1, 2 and 5-18. In accordance with the exemplary embodiment of the present invention, all of the fasteners 20a-e, 120a-e, 220a-e can be driven with the tip 22 of a driver 24 that is illustrated in Figures 2 and 3, as will be discussed in greater detail below.

Referring to Figure 1, the fastener 20a includes a shank 26a that extends from, and is for remaining fixedly attached to, the fastener's head 28a. The transition between the shank 26a and the head 28a typically occurs at a shoulder 29. The head 28a includes a composite recess 30 that is for receiving the tip 22 of the driver 24, as will be discussed in greater detail below. The composite recess 30 includes superimposed large, medium, small and innermost individual recesses 32, 34, 36, 38 that are in a tiered arrangement. The large individual recess 32 is open at / contiguous with the end face 33 of the head 28a. The medium individual recess 34 is open to / contiguous with a base 32a of the large individual recess 32. The small individual recess 36 is open to / contiguous with a base 34a of the medium individual recess 34. The somewhat conical, innermost individual recess 38 is open to / contiguous with the small individual recess 36.

When the fastener 20a is made of metal, it is typical for the fastener to include the innermost individual recess 38 because the innermost individual recess 38 is formed by a pointed tip of the punch used to form the composite recess 30. Nonetheless, in some situations, the fastener 20 can be made of material other than metal (e.g., such as polymeric material), and/or the composite recess 30 can be formed by something other than a punch, and/or the innermost individual recess 38 may not be present. That is, the innermost individual recess 38 can be optional.

As best understood with reference to Figure 2, in a top plan view of the fastener 20a, each of the individual recesses 32, 34, 36 is in the form of a hexagon. The hexagon defined by the large individual recess 32 is larger that the hexagon defined by the medium individual recess 34 in the top plan view, and the hexagon defined by the medium individual recess 34 is larger than the hexagon defined by the small individual recess 36 in the top plan view. For ease of explanation and understanding, and not for the purpose of narrowing the scope of the present invention, the individual recesses 32, 34, 36 have been respectively named "large", "medium" and "small" based upon the relative sizes of the hexagons defined thereby in the top plan view. Alternatively, the individual recesses 32, 34, 36 can be referred to by other names, and/or one or more of the individual recesses 32, 34, 36 can be in a shape other than a hexagon.

In accordance with the exemplary embodiment of the present invention, for each of the individual recesses 32, 34, 36, the hexagonal shape of the recesses is typically uniform from the top of the recess to the bottom of the recess, except that there will typically, but not necessarily, be a conventional, smooth transition / slight radius of curvature at the upper peripheral edge of each of the individual recesses. The smooth transition / slight radius of curvature at the upper peripheral edge of each of the individual recesses 32, 34, 36 is not shown in Figures 1 and 2; therefore, these and other similar drawings of this disclosure are somewhat schematic. Similarly, the fastener's shank 26a (Figure 1) typically includes exterior, spiral screw threads 39, only a portion of two of which are schematically shown in Figure 1.

Further referring to Figure 2, the hexagonal shapes defined by the individual recesses 32, 34, 36 are coaxial with respect to one another and the lengthwise axis of the fastener 20a / fastener's shank 26a, and each of these hexagons is symmetrical with respect to itself. The lengthwise axis of the fastener 20a / fastener's shank 26a is schematically illustrated by a vertically and centrally arranged dashed line, and designated by the reference numeral 27, in Figure 1. In addition, Figure 2 illustrates that the individual recesses 32, 34, 36 are symmetrically arranged with respect to one another. Alternatively, one or more of the individual recesses 32, 34, 36 can be rotated out of symmetrical alignment (i.e., can be misaligned) with respect to the other recesses 32, 34, 36, and one or more of the recesses 32, 34, 36, can be asymmetrical with respect to itself.

In accordance with the exemplary embodiment of the present invention, the large, medium, and small individual recesses 32, 34, 36 are configured for being drivingly engaged by the tip 22 of the driver 24 that is illustrated in Figures 2 and 3, whereas the innermost individual recess 38 is not configured for being drivingly engaged by the tip 22 of the driver 24. As shown in Figs. 1 and 2, the large, medium, and small individual recesses 32, 34, 36 are configured for being drivingly engaged because each includes, or is defined by, multiple planar side walls that each extend in, or extend at least substantially in, the direction of the axis 27. Each of the side walls of the large individual recesses 32 extends between the opposite ends of the large individual recess, and a representative one of these side walls is identified by the numeral 31 in Figures 1 and 2. Each of the side walls of the medium individual recesses 34 extends between the opposite ends of the medium individual recess, and a representative one of these side walls is identified by the numeral 35 in Figures 1 and 2. Each of the side walls of the small individual recesses 36 extends between the opposite ends of the small individual recess, and a representative one of these side walls is identified by the numeral 37 in Figures 1 and 2. The single wall 25 of the innermost recess 38 is generally conical, and it extends around and obliquely with respect to the axis 27. Differently configured walls are also within the scope of the present invention.

The large individual recess 32 has a length LL and a diameter DL, the medium individual recess 34 has a length LM and a diameter DM, and the small individual recess 36 has a length LS and a diameter DS. In accordance with the exemplary embodiment of the present invention, the length LM of the medium individual recess 34 is greater than at least the length LL of the large individual recess 32, and the length LM of the medium individual recess 34 can also be larger than the length LS of the small individual recess 36.

More specifically, the length LM of the medium individual recess 34 can be at least about 10% larger than the length LL of the large individual recess 32; even more specifically, the length LM of the medium individual recess 34 can be at least about 20% larger than the length LL of the large individual recess 32; even more specifically, the length LM of the medium individual recess 34 can be at least about 30% larger than the length LL of the large individual recess 32; and even more specifically, the length LM of the medium individual recess 34 can be at least about 40% larger than the length LL of the large individual recess 32. Similarly, the length LM of the medium individual recess 34 can be at least about 10% larger than the length LS of the small individual recess 36; even more specifically, the length LM of the medium individual recess 34 can be at least about 20% larger than the length LS of the small individual recess 36; and even more specifically, the length LM of the medium individual recess 34 can be at least about 30% larger than the length LS of the small individual recess 36.

However, the amount by which the length LM is longer than the lengths LL and LS is typically limited to at most 100%. More specifically, in each case, but independently, the amount may be limited to 75% and even more specifically to 50%.

In one specific version of the exemplary embodiment of the present invention, the dimensions can be as indicated in Table I, which follows.

**Table I, for First Version of Exemplary Embodiment**

| Individual Recess | Dimension | Measurement In Millimeters | LM as % |
|---|---|---|---|
| large individual recess 32 | LL | 1.05 | 142 |
| | DL | 5.98 | |
| medium individual recess 34 | LM | 1.50 | 100 |
| | DM | 3.95 | |
| small individual recess 36 | LS | 1.10 | 136 |
| | DS | 2.54 | |

In one version of the exemplary embodiment, each of the measurements presented in Table 1 is approximate (i.e., each of the measurements presented in Table I is preceded by "about"). In one more specific version of the exemplary embodiment, each of the measurements presented in Table I can be larger or smaller by about 0.02 millimeters, so that the dimensions can be within the ranges presented in Table II, which follows.

**Table II, for Second Version of Exemplary Embodiment**

| Individual Recess | Dimension | Measurement In Millimeters | Range of LM as % |
|---|---|---|---|
| large individual recess 32 | LL | From about 1.03 to about 1.07 | 138-147 |
| | DL | From about 5.96 to about 6.00 | - |
| medium individual recess 34 | LM | From about 1.48 to about 1.52 | 100 |
| | DM | From about 3.93 to about 3.97 | - |
| small individual recess 36 | LS | From about 1.08 to about 1.12 | 132-141 |
| | DS | From about 2.52 to about 2.56 | - |

Alternatively, each of the measurements presented in Table I can be larger or smaller by about 5%, so that the dimensions can be within the ranges presented in Table III, which follows.

**Table III, for Third Version of Exemplary Embodiment**

| Individual Recess | Dimension | Measurement In Millimeters | Range of LM as % |
|---|---|---|---|
| large individual recess 32 | LL | from about 1.00 to about 1.10 | 129-158 |
| | DL | from about 5.68 to about 6.28 | - |
| medium individual recess 34 | LM | from about 1.42 to about 1.58 | 100 |
| | DM | from about 3.75 to about 4.15 | - |
| small individual recess 36 | LS | from about 1.04 to about 1.16 | 122-152 |
| | DS | from about 2.41 to about 2.67 | - |

Although it might be preferred for the length LL of the large individual recess 32 to be smaller than the length LS of the small individual recess 36, it is also possible, in accordance with some examples of the present invention, for the length LL of the large individual recess 32 to be about the same as, or even larger than, the length LS of the small individual recess 36, as indicated by Table III.

Measurements other than those explicitly presented above (e.g. in Tables I, II and III), are also within the scope of the present invention.

As best understood by referring also to Figures 3 and 4, the fastener 20a can be operated using the driver 24, after inserting the tip 22 of the driver into the composite recess 30. The tip 22 of the driver 24 corresponds in shape and size to the composite recess 30. More specifically, the driver's tip 22 includes large, medium and small tiers 40, 42, 44. In the version that is illustrated in the drawings, the driver's large tier 40 substantially corresponds in size and shape to the large individual recess 32 of the fastener 20a. Similarly, the driver's medium tier 42 substantially corresponds in size and shape to the medium individual recess 34 of the fastener 20a. Likewise, the driver's small tier 44 substantially corresponds in size and shape to the small individual recess 36 of the fastener 20a. Accordingly, the measurements presented in the above Tables I, II and III for the fastener's individual recesses 32, 34, 36, as well as the other above-discussed, dimension-related characterizations for the fastener's individual recesses 32, 34, 36, respectively correspond to the driver's tiers 40, 42, 44. That is, the large tier 40 substantially has the same length LL and diameter DL as the large individual recess 32, the medium tier 42 substantially has the same length LM and diameter DM as the medium individual recess 34, and the small tier 44 substantially has the same length LS and diameter DS as the small individual recess 36. Accordingly, the dimensions LL, DL, LM, DM, LS and DS are included in Figures 3 and 4.

Notwithstanding the foregoing, the length of the large tier 40 can be longer (as compared to the other tiers) than shown in Figure 3. For example, the length of the large tier 40 can extend all the way to the upper end of the driver 24. In this regard and for example, in a relatively large fastener, the large individual recess 32 can be longer than the medium individual recess 34.

Optionally, the driver's tip 22 can include a somewhat conical, final tier 46 that corresponds in size and shape to the fastener's innermost recess 38. While the tip 22 of the driver 24 is fully inserted into the fastener's composite recess 30 and torque is applied to the driver to operate the fastener, the large tier 40 fills the large individual recess 32 and applies torque to (e.g., drivingly engages) the fastener's side walls (e.g., see the side wall 31 in Figures 1 and 2) that encircle and thereby define the large individual recess 32, the medium tier 42 fills the medium individual recess 34 and applies torque to (e.g., drivingly engages) the fastener's side walls (e.g., see the side wall 35 in Figures 1 and 2) that encircle and thereby define the medium individual recess 34, and the small tier 44 fills the small individual recess 36 and applies torque to (e.g., drivingly engages) the fastener's side walls (e.g., see the side wall 37 in Figures 1 and 2) that encircle and thereby define the small individual recess 36. Optionally, the driver's final tier 46 can engage the fastener's innermost individual recess 38, but typically only a negligible amount of torque, if any, would be applied to the fastener's wall 25 that defines the innermost individual recess 38. That is, typically the driver's final tier 46 does not drivingly engage the fastener's innermost individual recess 38.

Typically the driver 24 is a one-piece component such that each of the tiers 40, 42, 44, 46 is an integral part of the driver, and each of the tiers is fixedly connected to its adjacent tiers. Whereas the driver 24 is illustrated in Figures 3 and 4 as being in the form of a bit, such as a bit for being removably installed to and used in conjunction with a power tool, the driver can alternatively be in the form of a manually-operated tool. For example, the driver 24 can be fitted with a handle at the end opposite the tip 22.

In accordance with the exemplary embodiment of the present invention, the fit between the driver's tip 22 and the fastener's composite recess 30 can be in the form of an interference fit, which can be characterized as providing a "stick-fit" feature of the present invention. The interference fit can be the result of the large tier 40 having substantially the same length LL and diameter DL as the large individual recess 32, the medium tier 42 having substantially the same length LM and diameter DM as the medium individual recess 34, the small tier'44 having substantially the same length LS and diameter DS as the small individual recess 36, and these dimensions being maintained within close enough tolerances to provide the desired interference fit. It may be possible for the interference fit to be such that both: 1) the driver's tip 22 can be reasonably easily fully inserted into the composite recess 30 of the fastener 20a, and thereafter the fastener 20a can be reasonably easily carried solely by the driver 24 as a result of the interference fit, even with the fastener below the driver and each being vertically oriented; and 2) the driver's tip 22 can be reasonably easily removed from the composite recess 30 of the fastener 20a when desired.

In a first example, this interference fit is provided without employing any of the ribs described in US 6,988,432 B2. In accordance with this first example and according to prophetic theory to which the applicants do not intend to be bound, it is believed that the interference fit and/or other features can be enhanced as a result of the length LM of the medium individual recess 34 and medium tier 42 being relatively large as compared to a comparable length in prior comparable devices. In a second example, the subject interference fit is provided through the use of one or more ribs as described in US 6,988,432 B2. It is also within the scope of the present invention for the interference fit to be omitted, if desired, or as may result from not maintaining close enough tolerances. That is, the interference fit / "stick fit" feature can be optional.

Even if the interference fit / stick fit feature is omitted, the present invention can still provide an improved balance of properties with respect to other features, such as "cam-out" and general ease of use. For example and regarding cam-out, features of the present invention (e.g., the selected lengths and diameters) seek to prevent the tip 22 of the driver 24 from inadvertently coming out and/or disfiguring the composite recess 30 of a fastener 20 while the fastener is being driven by the driver.

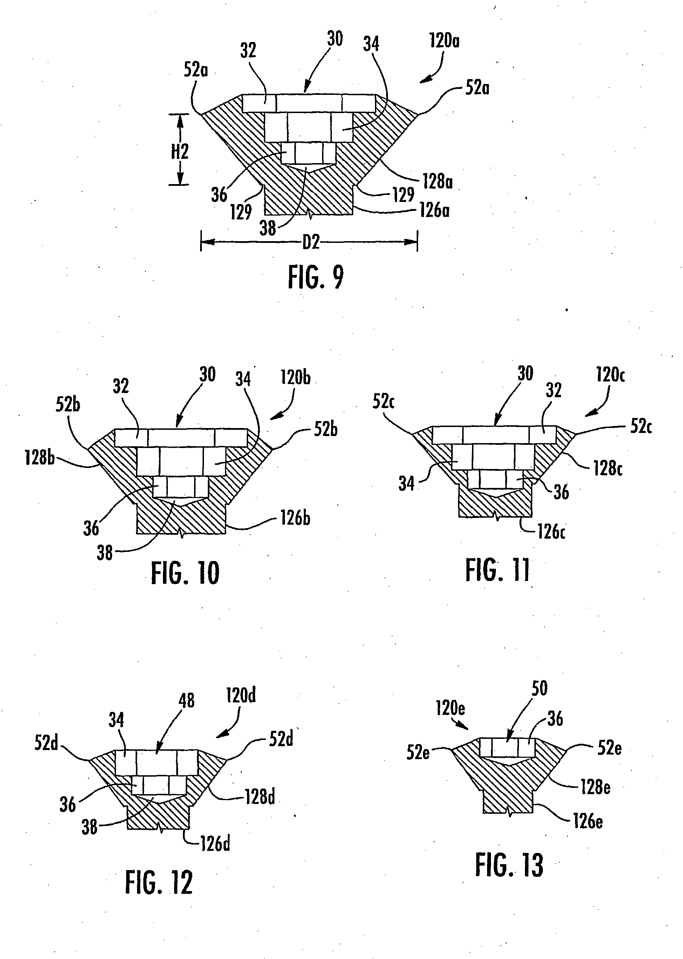

In accordance with the exemplary embodiment of the present invention, for a range of fasteners that includes differently sized fasteners 20a-e (Figures 1, 2 and 5-8), and that can also include differently shaped fasteners 120a-e, 220a-e (Figures 9-18), all of the large individual recesses 32 included therein are at least substantially the same size, all of the medium individual recesses 34 included therein are at least substantially the same size, and all of the small individual recesses 36 included therein are at least substantially the same size, so that the same driver 24 can be used to operate all of the fasteners in the range. For example, the range can include standard sized fasteners, namely six gauge, eight gauge, ten gauge, twelve gauge and fourteen gauge fasteners. Other ranges are also within the scope of the present invention. That is, it is also within the scope of the present invention for the dimensions presented in Tables I, II and III to be respectively scaled upward and downward for fasteners sized above and below the standard size range.

Whereas the fasteners 20a-e, 120a-e and 220a-e (Figures 1, 2 and 5-18) can be more specifically referred to as screws, they can alternatively be in the form of bolts or other fasteners.

### Fourteen-Gauge Flat-Head Screw

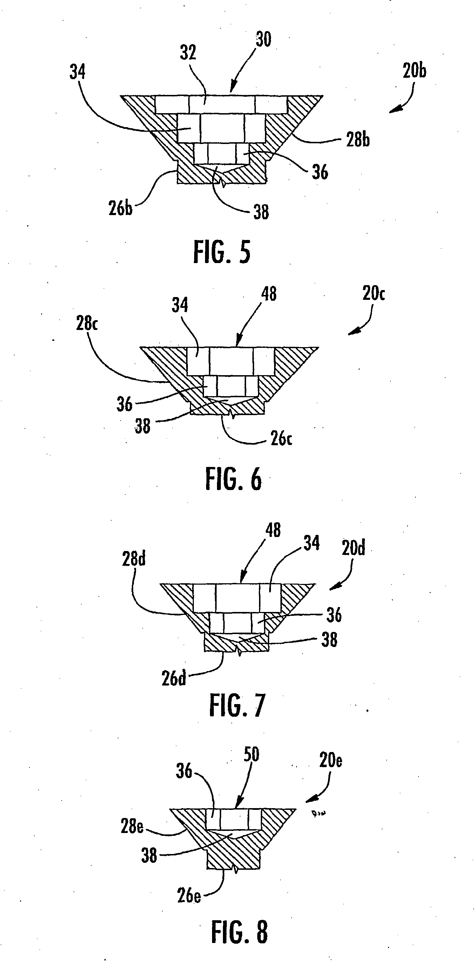

The fastener 20a illustrated in Figures 1 and 2 is a fourteen-gauge flat-head screw with the following characteristics, in accordance with the exemplary embodiment of the present invention. The composite recess 30 can be more specifically referred to as a large composite recess 30, since it is relatively large as compared to a medium composite recess 48 (e.g., see Figures 6 and 7) and a small composite recess 50 (e.g., see Figure 8), which are discussed in greater detail below.

As best understood with reference to Figure 1, the head 28a has a length H1 that is measured from the top of the head 28a to the top of the shank 26a (i.e., to the shoulder 29, or the like, that defines the transition between the shank 26a and the head 28a). The length H1 is about 3.89 millimeters. The head 28a has a maximum diameter D1 that is measured perpendicular to the lengthwise centerline of the fastener 20a. The diameter D1 is about 12.18 millimeters. In the fastener 20a, the bottom of the small individual recess 36 is above the shank 26a, whereas the innermost individual recess 38 extends into the shank 26a.

The fasteners 20b-e illustrated in Figures 5-8, as well as the manner in which they are operated using the driver 24, respectively correspond to the fastener 20a and the manner in which it is operated with the driver, except for variations noted and variations that will be apparent to those of ordinary skill in the art.

### Twelve-Gauge Flat-Head Screw

The fastener 20b illustrated in Figure 5 is a twelve-gauge flat-head screw with the following characteristics, in accordance with the exemplary embodiment of the present invention. The fastener 20b includes a large composite recess 30 that is the same as the large composite recess 30 of the fastener 20a of Figures 1 and 2. Accordingly, the fastener 20b has a large individual recess 32 that is open at / contiguous with the end face of its head 28b. The end face of the head 28b is opposite from the fastener's shank 26b.

The fastener's head 28b has a length, measured from the top of the head 28b to the top of the shank 26b, of about 3.35 millimeters. The head 28b has a maximum diameter, measured perpendicular to the lengthwise centerline of the fastener 20b, of about 10.50 millimeters. The small individual recess 36 of the fastener 20b extends about 0.3 millimeters into the shank 26b.

### Ten-Gauge Flat-Head Screw

The fastener 20c illustrated in Figure 6 is a ten-gauge flat-head screw with the following characteristics, in accordance with the exemplary embodiment of the present invention. The fastener 20c includes a medium composite recess 48 that is the same as the large composite recess 30 of the fastener 20a of Figures 1 and 2, except that the large individual recess 32 (Figures 1 and 2) has been omitted from the medium composite recess 48. Therefore, for the head 28c of the fastener 20c, the medium individual recess 34 is open at/contiguous with the end face of the head.

The length measured from the top of the head 28c to the top of the shank 26c is about 2.95 millimeters. The head 28c has a maximum diameter, measured perpendicular to the lengthwise centerline of the fastener 20c, of about 9.21 millimeters. The bottom of the small individual recess 36 of the fastener 20c is above the shank 26c, whereas the innermost individual recess 38 extends into the shank 26c.

As can be best understood by also referring to Figures 3 and 4, while the tip 22 of the driver 24 is fully inserted into the medium composite recess 48 and torque is applied to the driver to operate the fastener 20c, the large tier 40 is outside of the medium composite recess 48, whereas the medium tier 42 fills the medium individual recess 34 of the fastener 20c and applies torque to the fastener's surfaces that extend around and thereby define the medium individual recess 34, and the small tier 44 fills the small individual recess 36 of the fastener 20c and applies torque to the fastener's surfaces that extend around and thereby define the small individuals recess 36.

### Eight-Gauge Flat-Head Screw

The fastener 20d illustrated in Figure 7 is an eight-gauge flat-head screw with the following characteristics, in accordance with the exemplary embodiment of the present invention. The fastener 20d includes a medium composite recess 48 that is the same as, and operates in conjunction with the driver 24 (Figures 3 and 4) in the same manner as, the medium composite recess 48 of the fastener 20c of Figure 6. For example, for the head 28d of the fastener 20d, the medium recess 34 is open at / contiguous with the end face of the head.

The fastener's head 28d has a length, measured from the top of the head to the top of the shank 26d, of about 2.54 millimeters. The head 28d has a maximum diameter, measured perpendicular to the lengthwise centerline of the fastener 20d, of about 7.93 millimeters. The small individual recess 36 of the fastener 20d extends about 0.06 millimeters into the shank 26d.

### Six-Gauge Flat-Head Screw

The fastener 20e illustrated in Figure 8 is a six-gauge flat-head screw with the following characteristics, in accordance with the exemplary embodiment of the present invention. The fastener 20e includes a small composite recess 50 that is the same as the large composite recess 30 of the fastener 20a of Figures 1 and 2, except that the large and medium individual recesses 32, 34 (Figures 1 and 2) have been omitted from the small composite recess 50. Therefore, for the head 28e of the fastener 20e, the small individual recess 36 is open at / contiguous with the end face of the head.

The length measured from the top of the head 28e to the top of the shank 26e is about 2.11 millimeters. The head 28e has a maximum diameter, measured perpendicular to the lengthwise centerline of the fastener 20e, of about 6.64 millimeters. The bottom of the innermost individual recess 38 of the fastener 20e is above the shank 26e.

As can be best understood by also referring to Figures 3 and 4, while the tip 22 of the driver 24 is fully inserted into the small composite recess 50 and torque is applied to the driver to operate the fastener 20e, the large and medium tiers 40, 42 are outside of the small composite recess 50, whereas the small tier 44 fills the small individual recess 36 of the fastener 20e and applies torque to the fastener's surfaces that extend around and thereby define the small individual recess 36.

### Oval-Head Screws

In accordance with the exemplary embodiment of the present invention, the fasteners 120a-e of Figures 9-13 are oval-head screws having the following characteristics. The fasteners 120a-e, as well as the manner in which they are operated using the driver 24 (Figures 3 and 4), respectively correspond to the fasteners 20a-e (Figures 1, 2 and 5-8) and the manner in which the fasteners 20a-e are operated with the driver 24, except for variations noted and variations that will be apparent to those of ordinary skill in the art.

As shown in Figure 9, the head 128a of the fourteen-gauge oval-head screw 120a has a length H2 that is measured from the outermost peripheral, edge 52a of the head 128a to the top of the shank 126a (i.e., to the shoulder 129, or the like, that defines the transition between the shank 126a and the head 128a). The length H2 is about 3.89 millimeters. The head 128a has a maximum diameter D2 that is measured perpendicular to the lengthwise centerline of the fastener 120a and at the outermost peripheral edge 52a. The diameter D2 is about 12.18 millimeters. The innermost individual recess 38 does not extend into the shank 126a of the fastener 120a.

Referring to Figure 10, the head 128b of the twelve-gauge oval-head screw 120b has a length, measured from the peripheral edge 52b to the top of the shank 126b, of about 3.35 millimeters. The head 128b has a maximum diameter, measured perpendicular to the lengthwise centerline of the fastener 120b and at the outermost peripheral edge 52b, of about 10.50 millimeters. In the fastener 120b, the bottom of the small individual recess 36 is above the shank 126b, whereas the innermost individual recess 38 extends into the shank 126b.

As shown in Figure 11, the head 128c of the ten-gauge oval-head screw 120c includes a large composite recess 30 that is the same as, and is operated in the same manner as, the large composite recesses 30 discussed above. The length measured from the peripheral edge 52c to the top of the shank 126c is about 2.95 millimeters. The head 128c has a maximum diameter, measured perpendicular to the lengthwise centerline of the fastener 120c and at the outermost peripheral edge 52c, of about 9.21 millimeters. The small individual recess 36 of the fastener 120c extends about 0.21 millimeters into the shank 126c.

Referring to Figure 12, the head 128d of the eight-gauge oval-head screw 120d has a length, measured from the peripheral edge 52d to the top of the shank 126d, of about 2.54 millimeters. The head 128d has a maximum diameter, measured perpendicular to the lengthwise centerline of the fastener 128d and at the peripheral edge 52d, of about 7.93 millimeters. In the fastener 120d, the bottom of the innermost individual recess 38 is above the shank 126d.

As best understood with reference to Figure 13, the head 128e of the six-gauge oval-head screw 120e has a length, measured from the peripheral edge 52e to the top of the shank 126e, of about 2.11 millimeters. The head 128e has a maximum diameter, measured perpendicular to the lengthwise centerline of the fastener 120e and at the peripheral edge 52e, of about 6.64 millimeters.

### Pan-Head Screws

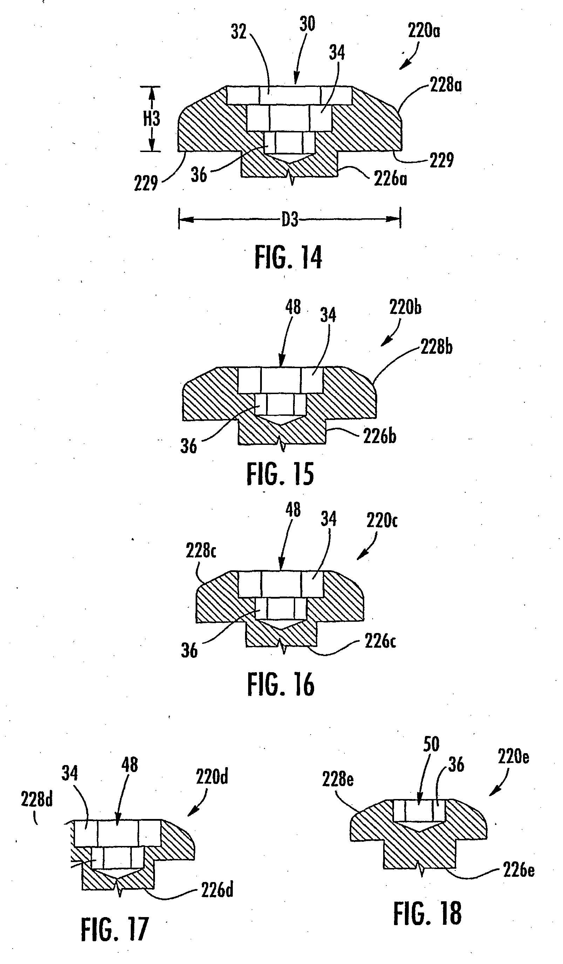

In accordance with the exemplary embodiment of the present invention, the fasteners 220a-e of Figures 14-18 are pan-head screws having the following characteristics. The fasteners 220a-e, as well as the manner in which they are operated using the driver 24 (Figures 3 and 4), respectively correspond to the fasteners 20a-e (Figures 1, 2 and 5-8) and the manner in which the fasteners 20a-e are operated with the driver 24, except for variations noted and variations that will be apparent to those of ordinary skill in the art.

As shown in Figure 14, the head 228a of the fourteen-gauge pan-head screw 220a has a length H3 that is measured from the top of the head 228a to the top of the shank 226a (i.e., to the shoulder 229, or the like, that defines the transition between the shank 226a and the head 228a). The length H3 is less than the length H1 (Figure 1) of the fastener 20a (Figures 1 and 2). The head 228a has a maximum diameter D3 that is measured perpendicular to the lengthwise centerline of the fastener 220a. The diameter D3 is about 12.26 millimeters. The small individual recess 36 of the fastener 220a extends about 0.03 millimeters into the shank 226a.

As shown Figure 15, the head 228b of the twelve-gauge pan-head screw 220b includes a medium composite recess 48 that is the same as, and is operated in the same manner as, the medium composite recesses 48 discussed above. The fastener 220b has a length, measured from the top of the head 228b to the top of the shank 226b, that is less than the length of the head 28b (Figure 5) of the fastener 20b (Figure 5). The head 228b has a maximum diameter, measured perpendicular to the lengthwise centerline of the fastener 220b, of about 10.56 millimeters. In the fastener 220b, the bottom of the small individual recess 36 is above the shank 226b, whereas the innermost individual recess extends into the shank 226b.

Referring to Figure 16, the head 228c of the ten-gauge pan-head screw 220c has a length, measured from the top of the head 228c to the top of the shank 126c, that is less than the length of the head 28c (Figure 6) of the fastener 20c (Figure 6). The head 228c has a maximum diameter, measured perpendicular to the lengthwise centerline of the fastener 220c, of about 9.27 millimeters.

Referring to Figure 17, the head 228d of the eight-gauge pan-head screw 220d has a length, measured from the top of the head 228d to the top of the shank 226d, that is less than the length of the head 28d (Figure 7) of the fastener 20d (Figure 7). The head 228d has a maximum diameter, measured perpendicular to the lengthwise centerline of the fastener 228d, of about 7.98 millimeters. The small individual recess 36 of the fastener 220d extends about 0.33 millimeters into the shank 226d.

As best understood with reference to Figure 18, the head 228e of the six-gauge pan-head screw 220e has a length, measured from the top of the head 228e to the top of the shank 226e, that is less than the length of the head 28e (Figure 8) of the fastener 20e (Figure 8). The head 228e has a maximum diameter, measured perpendicular to the lengthwise centerline of a fastener 220e, of about 6.68 millimeters.

Whereas examples of specific dimensions are provided in the foregoing, it is to be understood that a wide variety of different dimensions are within the scope of the present invention.

While the screws in Figures 5 to 18 are described by reference to their gauge size, they may also be presented in metric sizes or any other system of sizing. In metric, the screws having three recesses (Figures 5, 9-11, 14) would most likely be M10 and M12, those having two recesses, (Figures 6, 7, 12, 15-17) would most likely be M8 and M10 and those having a single tier (Figures 8, 13, 18) would most likely be M6.

From the above it is clear that there can be variation, and one screw of one size may have two or three tiers, whereas in a different form of head, for example, the screw may have more or less recesses.

From the point of view of torque driving capacity, typically the more recesses a screw can accommodate, typically the more torque that can be driven, although care needs also to be taken to ensure that the size of the composite recess is not so large in the head of the screw so as to weaken the screw. Thus, while substantial torque may be transmitted between the driver and recess, this is to no avail if the screw is weakened such that, at those substantial torques, the head of the screw fails in some way. Consequently, a balance has to be struck depending on the circumstances.

An aspect of the present invention is that a single driver having three tiers is employed to drive a range of screws of different sizes having one, two or three tiers.

The "rib" stick-fit feature referred to above and described in US6,988,432 B2 is preferably implemented in respect of the smallest recess, if it is implemented at all. In this event, or in the event that the rib feature is not employed at all but sufficient tolerances are nonetheless provided, it is found in theory that screws can stay in engagement with a driver very satisfactorily in the event that the screws have single recesses or three recesses. By "very satisfactorily" is meant that, when the screw is engaged with the driver tip it is quite reasonably possible to shake the driver by hand and yet the screw does not fall off (i.e. disengage from) the driver. This is a subjective test and assessment and a higher standard of "satisfaction" might be expected when the optional "rib" stick-fit feature is employed.

It is believed in theory (without wishing to be bound by any particular theory) that the reason "very satisfactory" performance is had with screws having a single recess is simply because these screws are obviously the smallest screws, and their inertia is less when accelerated in different directions and so there is, in any event, less tendency for them to disengage.

It is believed in theory (without wishing to be bound by any particular theory) that the reason "very satisfactory" performance is had with screws having three tiers is because, with three tiers, there is substantial "keying" between the composite recess of the screw and the driver tip. Despite the relatively substantial inertia of larger screws having three-recess composite recesses, the keying between the very satisfactorily retains the screw in engagement with the driver.

However and as one example, in the prior art in which the length of the recesses are substantially the same, it has been theoretically observed that, in the case of screws having just two recesses, an intermediate position does not pertain. Instead, it seems, the loss of the extra keying provided by three recesses (as opposed to two) is not sufficiently compensated by the reduction in inertia in reducing screw size.

By increasing the length of the middle recess and having sufficient tolerances, however, this problem is solved, or at least mitigated:
in the case of three-recess screws, there is no loss of keying;
in the case of single-recess screws, the increased length of the middle recess is taken primarily from the largest recess, so there is little reduction in the length of the smallest recess; and
in the case of two-recess screws, the extra length of the second recess compensates for the loss of keying and permits quite satisfactory engagement between such screws and the driver.

Thus, while the prior art teaches a three-recess arrangement, the known prior art does so in the context of three substantially equal-length recesses giving rise to the problem mentioned above.

Another problem that is believed to exist with the prior art in which three equal length recesses are employed is a certain lack of directional stability, which is particularly evident with two recess screws, and can result in "cam-out" as discussed above. Because none of the recesses are very deep, it is relatively easy to tilt the driver tip with respect to the composite recess and disengage the driver from the recess. Consequently the step of extending the length of the middle recess serves to better guide the driver axially with respect to the screw and therefore helps maintain proper engagement, not only with two-recess screws but also with three-recess screws. Because single-recess screws are quite small, the misalignment problem is typically not significant.

In accordance with an alternative embodiment of the present invention, which can be like the exemplary embodiment except for variations noted and variations that will be apparent to those of ordinary skill in the art, the interference fit / stick-fit feature can be provided by, or enhanced by, tapering each of the planar side walls of the small tier 44 of the driver 24 so that each of the planar side walls of the small tier 44 extend at an angle of 3 degrees, 6 minutes with respect to the elongate central axis of the driver. As a result, for this alternative embodiment of the present invention: at the end of the small tier 44 that is adjacent to the final tier 46, the diameter measured from one side wall of the small tier to the opposite side wall of the small tier is 2.5 millimeters, and at the end of the small tier 44 that is adjacent to the medium tier 42, the diameter measured from one side wall of the small tier to the opposite side wall of the small tier is 2.6 millimeters.

## Claims

1. Fasteners (20a-e, 120a-e, 220a-e) in a range of different sizes wherein:-
each fastener includes a threaded shank (26a-e, 126a-e, 226a-e) connected to a head (28a-e, 128a-e, 228a-e);
the shank includes an elongate axis (27) that extends in an axial direction;
the head includes an end (33) that is distant from the shank;
the head defines a driving recess (30, 40, 50) that is open at the end of the head; wherein
a) at least some smaller fasteners (20e, 120e, 220e) of the range have a driving recess (50) that is a single, first recess (36) that has a first length (LS) that extends in the axial direction between the opposite ends of said first recess;
b) at least some medium-sized fasteners (20c-d, 120c-d, 220c-d) of the range have a driving recess that is a composite recess (40) that includes at least a first recess (36) and a second recess (34) that are superimposed with respect to one another; wherein
the first recess has a length (LS) that extends in the axial direction between opposite ends of the first recess; and
the second recess is between said open end and said first recess and has a length (LM) that extends in the axial direction between opposite ends of the second recess; and
c) at least some larger-sized fasteners (20a,b, 120a,b, 220a,b) of the range have a driving recess that is a composite recess (30) that includes at least a first recess (36), a second recess (34) and a third recess (32) that are superimposed with respect to one another; wherein
the first recess has a length (LS) that extends in the axial direction between opposite ends of the first recess;
the second recess has a length (LM) that extends in the axial direction between opposite ends of the second recess;
the third recess is between said open end and said second recess and has a length (LL) that extends in the axial direction between opposite ends of the third recess; and
the lengths of the first and second recesses are the same as the lengths of said first and second recesses of the medium sized fasteners;
wherein a driving tip (22) of a driving tool adapted to fit and drive all of the first, second and third recesses (32,34,36) of the composite recess (30) of the larger-sized fasteners also fits and drives all the recesses (32,34) of the smaller and medium-sized fasteners
**characterized in that**
in the medium-sized fasteners, the length (LM) of the second recess is greater than the length (LS) of the first recess and the length of the first recess is the same as the length of said first recess of said smaller-sized fasteners; and
in the larger-sized fasteners, the length of the third recess (LL) is less than the length (LM) of the second recess.

2. Fasteners as claimed in claim 1, wherein the length (LL) of the third recess is substantially the same as the length (LS) of the first recess.

3. Fasteners as claimed in claim 1 or 2, wherein the depth (H1) of the driving recess of said larger fasteners is the sum of the lengths (LS,LM,LL) of the first, second and third recesses, and wherein the length of the first and third recesses (LS,LL) are each between 25% and 35% of the depth (H1) of the driving recess and the length of the second recess (LM) is between 30% and 50% of the depth (H1) of the driving recess.

4. Fasteners as claimed in claim 1 or 2, wherein the length of the first and third recesses are each between 26% and 30% of the depth of the composite recess and the length of the second recess is between 40% and 48% of the depth of the composite recess.

5. Fasteners as claimed in any preceding claim, wherein the depth (H1) of the composite recess of said larger-sized fasteners is between 3 and 5 mm, preferably between 3.5 and 4.5 mm.

6. Fasteners as claimed in any preceding claim, further comprising at least some largest-sized fasteners of the range that correspond with said larger-sized fasteners except that said third recess has a length at least as long as the length of the second recess.

7. A fastener system comprising a driver (24) and a range of fasteners (20a-e, 120a-e, 220a-e) as claimed in any preceding claim, wherein the driver:
includes a tip (22) for being received in the driving recess (30,40,50) of any of the smaller-, medium- or larger-sized fasteners in a predetermined manner;
the tip of the driver includes a first tier (44), a second tier (42) and a third tier (40) that are superimposed with respect to one another;
the first tier (44) and the first recess (36) are cooperatively adapted so that the first tier drivingly engages within the first recess while the tip is within the driving recess (30,40,50) of smaller-, medium- and larger-sized fasteners in the predetermined manner;
the second tier (42) and the second recess (34) are cooperatively adapted so that the second tier drivingly engages within the second recess and along at least substantially the entire length of the second recess while the tip is within the driving recess (30,40) of medium- and larger-sized fasteners in the predetermined manner; and
the third tier (40) and the third recess (32) are cooperatively adapted so that the third tier drivingly engages within the third recess while the tip is within the driving recess (30) of larger-sized fasteners in the predetermined manner.

## Patentansprüche

1. Befestigungseinrichtungen (20a-e, 120a-e, 220a-e) in einem Sortiment unterschiedlicher Größen, wobei:
jede Befestigungseinrichtung einen Gewindeschaft (26a-e, 126a-e, 226a-e) aufweist, der mit einem Kopf (28a-e, 128a-e, 228a-e) verbunden ist;
wobei der Schaft eine Längsachse (27) aufweist, die sich in eine axiale Richtung erstreckt;
wobei der Kopf ein Ende (33) aufweist, das distal zu dem Schaft angeordnet ist;
wobei der Kopf eine Treiberaussparung (30, 40, 50) definiert, die an dem Ende des Kopfes offen ist; wobei
a) mindestens einige kleinere Befestigungseinrichtungen (20e, 120e, 220e) des Sortiments eine Treiberaussparung (50) aufweisen, bei der es sich um eine einzelne, erste Aussparung (36) handelt, die eine erste Länge (LS) aufweist, die sich in die axiale Richtung zwischen den entgegengesetzten Enden der genannten ersten Aussparung erstreckt;
b) mindestens einige mittelgroße Befestigungseinrichtungen (20c-d, 120c-d, 220c-d) des Sortiments eine Treiberaussparung aufweisen, bei der es sich um eine Verbundaussparung (40) handelt, die mindestens eine erste Aussparung (36) und eine zweite Aussparung (34) aufweist, die im Verhältnis zueinander übereinander liegen; wobei wobei die erste Aussparung eine Länge (LS) aufweist, die sich in die axiale Richtung zwischen entgegengesetzten Enden der ersten Aussparung erstreckt; und
wobei sich die zweite Aussparung zwischen dem genannten offenen Ende und der genannten ersten Aussparung befindet und eine Länge (LM) aufweist, die sich in die axiale Richtung zwischen entgegengesetzten Ende der zweiten Aussparung erstreckt; und
c) mindestens einige größere Befestigungseinrichtungen (20a,b, 120a,b, 220a,b) des Sortiments eine Treiberaussparung aufweisen, bei der es sich um eine Verbundaussparung (30) handelt, die mindestens eine erste Aussparung (36), eine zweite Aussparung (34) und eine dritte Aussparung (32) aufweist, die im Verhältnis zueinander übereinander liegen; wobei
die erste Aussparung eine Länge (LS) aufweist, die sich in die axiale Richtung zwischen entgegengesetzten Enden der ersten Aussparung erstreckt;
die zweite Aussparung eine Länge (LM) aufweist, die sich in die axiale Richtung zwischen entgegengesetzten Enden der zweiten Aussparung erstreckt;
die dritte Aussparung zischen dem genannten offenen Ende und der genannten zweiten Aussparung angeordnet ist und eine Länge (LL) aufweist, die sich in die axiale Richtung zwischen entgegengesetzten Enden der dritten Aussparung erstreckt; und
die Längen der ersten und zweiten Aussparungen den Längen der genannten ersten und zweiten Aussparungen der mittelgroßen Befestigungseinrichtungen entsprechen;
wobei eine Treiberspitze (22) eines Treiberwerkzeugs, die mit sämtlichen der ersten, zweiten und dritten Aussparungen (32, 34, 36) der Verbundaussparung (30) der größeren Befestigungseinrichtungen zusammenpasst und diese treiben kann, auch mit sämtlichen Aussparungen (32, 34) der kleineren und mittelgroßen Befestigungseinrichtungen zusammenpasst und diese antreibt;
**dadurch gekennzeichnet, dass**
in den mittelgroßen Befestigungseinrichtungen die Länge (LM) der zweiten Aussparung größer ist als die Länge (LS) der ersten Aussparung, und wobei die Länge der ersten Aussparung gleich der Länge der genannten ersten Aussparung der genannten kleineren Befestigungseinrichtungen ist; und
in den größeren Befestigungseinrichtungen die Länge der dritten Aussparung (LL) kleiner ist als die Länge (LM) der zweiten Aussparung.

2. Befestigungseinrichtungen nach Anspruch 1, wobei die Länge (LL) der dritten Aussparung im Wesentlichen der Länge (LS) der ersten Aussparung entspricht.

3. Befestigungseinrichtungen nach Anspruch 1 oder 2, wobei die Tiefe (H1) der Treiberaussparung der genannten größeren Befestigungseinrichtungen der Summe der Längen (LS, LM, LL) der ersten, zweiten und dritten Aussparungen ist, und wobei die Länge der ersten und dritten Aussparungen (LS, LL) jeweils zwischen 25 % und 35 % der Tiefe (H1) der Treiberaussparung liegt, und wobei die Länge der zweiten Aussparung (LM) zwischen 30 % und 50 % der Tiefe (H1) der Treiberaussparung liegt.

4. Befestigungseinrichtungen nach Anspruch 1 oder 2, wobei die Länge der ersten und dritten Aussparungen jeweils zwischen 26 % und 30 % der Tiefe der Verbundaussparung liegt, und wobei die Länge der zweiten Aussparung zwischen 40 % und 48 % der Tiefe der Verbundaussparung liegt.

5. Befestigungseinrichtungen nach einem der vorstehenden Ansprüche, wobei die Tiefe (H1) der Verbundaussparung der größeren Befestigungseinrichtungen zwischen 3 und 5 mm liegt, vorzugsweise zwischen 3,5 und 4,5 mm.

6. Befestigungseinrichtungen nach einem der vorstehenden Ansprüche, wobei diese mindestens einige der größten Befestigungseinrichtungen umfassen, die den genannten größeren Befestigungseinrichtungen entsprechen, mit der Ausnahme, dass die genannte dritte Aussparung eine Länge aufweist, die mindestens so lang ist wie die Länge der zweiten Aussparung.

7. Befestigungseinrichtungssystem, das einen Treiber (24) und ein Sortiment von Befestigungseinrichtungen (20a-e, 120a-e, 220a-e) nach einem der vorstehenden Ansprüche umfasst, wobei der Treiber:
eine Spitze (22) zur Aufnahme in der Treiberaussparung (30, 40, 50) jedes der kleineren, mittelgroßen oder größeren Befestigungseinrichtungen auf vorbestimmte Art und Weise aufweist;
wobei die Spitze des Treibers eine erste Ebene (44), eine zweite Ebene (42) und eine dritte Ebene (40) aufweist, die im Verhältnis zueinander übereinander liegen;
wobei die erste Ebene (44) und die erste Aussparung (36) zusammenwirkend sind, so dass die erste Ebene treibend in der ersten Aussparung eingreift, während die Spitze sich in der Treiberaussparung (30, 40, 50) der kleineren, mittelgroßen und größeren Befestigungseinrichtungen in der vorbestimmten Art und Weise befindet;
wobei die zweite Ebene (42) und die zweite Aussparung (34) zusammenwirkend sind, so dass die zweite Ebene treibend in der zweiten Aussparung eingreift und entlang zumindest im Wesentlichen der gesamten Länge der zweiten Aussparung, während sich die Spitze in der Treiberaussparung (30, 40) der mittelgroßen und größeren Befestigungseinrichtungen in der vorbestimmten Art und Weise befindet; und
wobei die dritte Ebene (40) und die dritte Aussparung (32) zusammenwirkend sind, so dass die dritte Ebene treibend in der dritten Aussparung eingreift, während sich die Spitze in der Treiberaussprung (30) der größeren Befestigungseinrichtungen in der vorbestimmten Art und Weise befindet.

## Revendications

1. Éléments de fixation (20a-e, 120a-e, 220a-e) dans une gamme de différentes tailles, dans lesquels :
chaque élément de fixation comprend une tige filetée (26a-e, 126a-e, 226a-e) connectée à une tête (28a-e, 128a-e, 228a-e) ;
la tige comprend un axe allongé (27) qui s'étend dans une direction axiale ;
la tête comprend une extrémité (33) qui est distante de la tige ;
la tête définit une empreinte de vis (30, 40, 50) qui est ouverte à l'extrémité de la tête ; dans lesquels
a) au moins certains éléments de fixation plus petits (20e, 120e, 220e) de la gamme ont une empreinte de vis (50) qui est une première empreinte unique (36) qui a une première longueur (LS) qui s'étend dans la direction axiale entre les extrémités opposées de ladite première empreinte ;
b) au moins certains éléments de fixation de moyenne taille (20c-d, 120c-d, 220c-d) de la gamme ont une empreinte de vis qui est une empreinte composite (40) qui comprend au moins une première empreinte (36) et une deuxième empreinte (34) qui sont superposées l'une par rapport à l'autre ; dans lesquels
la première empreinte a une longueur (LS) qui s'étend dans la direction axiale entre les extrémités opposées de la première empreinte ; et
la deuxième empreinte est entre ladite extrémité ouverte et ladite première empreinte et a une longueur (LM) qui s'étend dans la direction axiale entre les extrémités opposées de la deuxième empreinte ; et
c) au moins certains éléments de fixation de plus grande taille (20a,b, 120a,b, 220a,b) de la gamme ont une empreinte de vis qui est une empreinte composite (30) qui comprend au moins une première empreinte (36), une deuxième empreinte (34) et une troisième empreinte (32) qui sont superposées les unes par rapport aux autres ; dans lesquels la première empreinte a une longueur (LS) qui s'étend dans la direction axiale entre les extrémités opposées de la première empreinte ;
la deuxième empreinte a une longueur (LM) qui s'étend dans la direction axiale entre les extrémités opposées de la deuxième empreinte ;
la troisième empreinte est entre ladite extrémité ouverte et ladite deuxième empreinte et a une longueur (LL) qui s'étend dans la direction axiale entre les extrémités opposées de la troisième empreinte ; et
les longueurs des première et deuxième empreintes sont les mêmes que les longueurs desdites première et deuxième empreintes des éléments de fixation de moyenne taille ;
dans lesquels une pointe de vis (22) d'un outil à vis adapté pour correspondre à et visser toutes les première, deuxième et troisième empreintes (32, 34, 36) de l'empreinte composite (30) des éléments de fixation de plus grande taille correspond et visse également toutes les empreintes (32, 34) des éléments de fixation de plus petite taille et de moyenne taille
**caractérisés en ce que**
dans les éléments de fixation de moyenne taille, la longueur (LM) de la deuxième empreinte est plus grande que la longueur (LS) de la première empreinte et la longueur de la première empreinte est identique à la longueur de ladite première empreinte desdits éléments de fixation de plus petite taille ; et
dans les éléments de fixation de plus grande taille, la longueur de la troisième empreinte (LL) est inférieure à la longueur (LM) de la deuxième empreinte.

2. Éléments de fixation selon la revendication 1, dans lesquels la longueur (LL) de la troisième empreinte est sensiblement la même que la longueur (LS) de la première empreinte.

3. Éléments de fixation selon la revendication 1 ou 2, dans lesquels la profondeur (H1) de l'empreinte de vis desdits éléments de fixation plus grands est la somme des longueurs (LS, LM, LL) des première, deuxième et troisième empreintes, et dans lesquels les longueurs des première et troisième empreintes (LS, LF) sont chacune comprises entre 25 % et 35 % de la profondeur (H1) de l'empreinte de vis et la longueur de la deuxième empreinte (LM) est comprise entre 30 % et 50 % de la profondeur (H1) de l'empreinte de vis.

4. Éléments de fixation selon la revendication 1 ou 2, dans lesquels les longueurs des première et troisième empreintes sont chacune comprises entre 26 % et 30 % de la profondeur de l'empreinte composite et la longueur de la deuxième empreinte est comprise entre 40 % et 48 % de la profondeur de l'empreinte composite.

5. Éléments de fixation selon l'une quelconque des revendications précédentes, dans lesquels la profondeur (H1) de l'empreinte composite desdits éléments de fixation de plus grande taille est comprise entre 3 et 5 mm, de préférence entre 3,5 et 4,5 mm.

6. Éléments de fixation selon l'une quelconque des revendications précédentes, comprenant en outre au moins certains éléments de fixation de taille maximale de la gamme qui correspondent auxdits éléments fixation de plus grande taille excepté que ladite troisième empreinte a une longueur au moins aussi longue que la longueur de la deuxième empreinte.

7. Système de fixation comprenant une vis (24) et une gamme d'éléments de fixation (20a-e, 120a-e, 220a-e) selon l'une quelconque des revendications précédentes, dans lequel la vis :
comprend une pointe (22) destinée à être reçue dans l'empreinte de vis (30, 40, 50) de l'un quelconque des éléments de fixation de plus petite taille, de moyenne taille ou de plus grande taille d'une manière prédéterminée ;
la pointe de la vis comprend un premier étage (44), un deuxième étage (42) et un troisième étage (40) qui sont superposés les uns par rapport aux autres ;
le premier étage (44) et la première empreinte (36) sont coopérativement adaptés de sorte que le premier étage vient en prise à l'intérieur de la première empreinte alors que la pointe est à l'intérieur de l'empreinte de vis (30, 40, 50) d'éléments de fixation de plus petite taille, de moyenne taille et de plus grande taille d'une manière prédéterminée ;
le deuxième étage (42) et la deuxième empreinte (34) sont coopérativement adaptés de sorte que le deuxième étage vient en prise à l'intérieur de la deuxième empreinte et le long d'au moins sensiblement toute la longueur de la deuxième empreinte alors que la pointe est à l'intérieur de l'empreinte de vis (30, 40) d'éléments de fixation de moyenne taille et de plus grande taille d'une manière prédéterminée ; et
le troisième étage (40) et la troisième empreinte (32) sont coopérativement adaptés de sorte que le troisième étage vient en prise à l'intérieur de la troisième empreinte alors que la pointe est à l'intérieur de l'empreinte de vis (30) d'éléments de fixation de plus grande taille de manière prédéterminée.
